# EUROPEAN PATENT APPLICATION

(11) **EP 1 924 035 A2**
(43) Date of publication of application: **21.05.2008**
(21) Application number: 07013396.2
(22) Date of filing: 09.07.2007
(51) Int. Cl.: H04L 12/56, H04L 12/28

(54) **Touch type bluetooth match system, bluetooth devices for same**

(30) Priority: 15.11.2006 CN 200620157974 U
(71) Applicant: Su, Wen Chi, Wunshan District Taipei City (TW)
(72) Inventor: Su, Wen Chi, Wunshan District Taipei City (TW)
(74) Representative: Strehl Schübel-Hopf & Partner

(57) **Abstract**

A touch type bluetooth match system includes a bluetooth master device for transmitting digital/analog data by means of bluetooth technology and capable of inquiring connection by an active mode, and a bluetooth slave device for transmitting digital/analog data by means of bluetooth technology and capable of being connected by a passive mode. When in use, the bluetooth slave device is set in the bluetooth master device and kept in touch with the bluetooth master device for bluetooth ID data interchange so that the bluetooth master device directly enters a connection mode for bluetooth data transmission subject to the bluetooth ID data stored therein.

## Description

### BACKGROUND OF THE INVENTION

### Field of the Invention:

The present invention relates to the application of bluetooth technology and more particularly, to a touch type bluetooth match system and bluetooth devices for the system. By means of direct touch between the bluetooth master device and the bluetooth slave device for bluetooth ID data interchange, the bluetooth master device directly enters a connection mode for bluetooth data transmission subject to the bluetooth ID data stored therein.

### Description of the Related Art:

Bluetooth wireless technology is a short-range communications technology developed by Ericsson and Nokia and intended to replace the cables connecting portable and/or fixed devices while maintaining high levels of security.

In May 1998,Ericsson, Nokia, Intel, Toshiba and IBM established the Bluetooth SIG (Special Interest Group). The Bluetooth SIG is the body that oversees the development of bluetooth standards and the licensing of the Bluetooth technologies and trademarks to manufacturers. Till July 2001, there are total 2491 bluetooth SIG members.

Bluetooth wireless technology uses 2.4GHz unlicensed ISM band for wireless transmission to replace cable transmission. It provides wireless internet connection, allows data synchornizing and exchange among different devices as well as linking of different electronic apparatus.

Bluetooth is primarily designed for low power consumption, with a short range (power-class-dependent: 1 meter, 10 meters, 100 m) based on low-cost transceiver microchips in each device. To avoid interfering with other protocols that use the 2.4GHz band, the Bluetooth protocol divides the band into 79 channels (each 1 MHz wide) and changes channels up to 1600 times per second. Subject to ACL (Asynchronous Connection-Less) link, implementations with versions 1.1 and 1.2 reach speeds of 723.2 kbit/s in downstream and 57.6kbit/s in upstream, or 433.9kbit/s for synchronous link. Subject to SCO (Synchronous Connection-Oriented) voice link, it reaches speed 64kbit/s.

According to bluetooth standards, the device to actively request for connection is a bluetooth master device, and the device that is requested for connection is a bluetooth slave device. A bluetooth master device can simultaneously request maximum 7 bluetooth slave devices for connection to form a piconet. A number of piconets can be connected through shairing devices to form a scatternet.

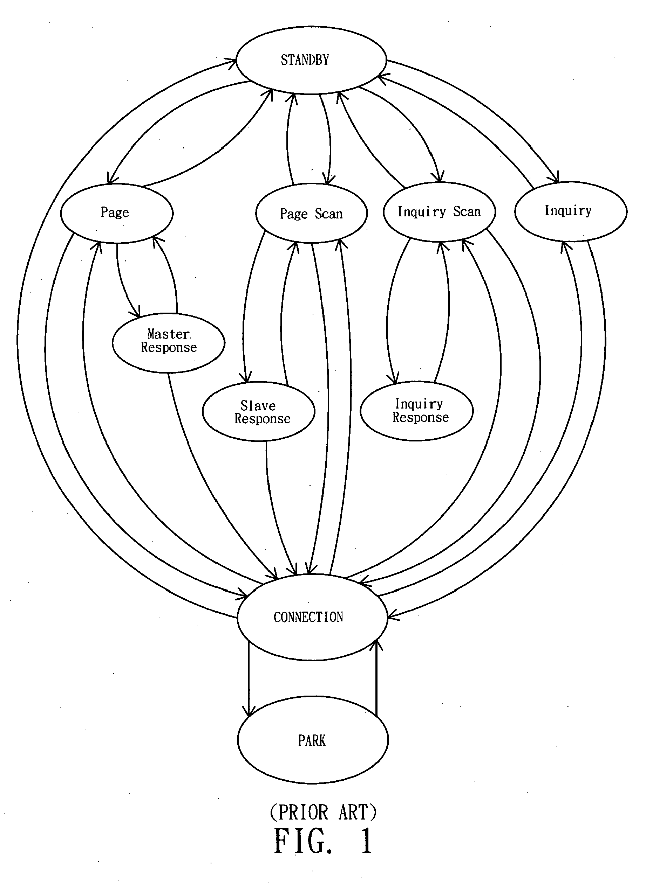

FIG. 1 is a schematic drawing explaining conventional bluetooth device connection control. As illustrated, when a bluetooth device is turned on, it enters standby mode. Thereafter, it runs an inquiry procedure to detect whether there is any connectable bluetooth device nearby. By means of page procedure, it links a specific bluetooth device to enter connected mode. Further, a bluetooth device can enter different power-saving modes subject to different requirements.

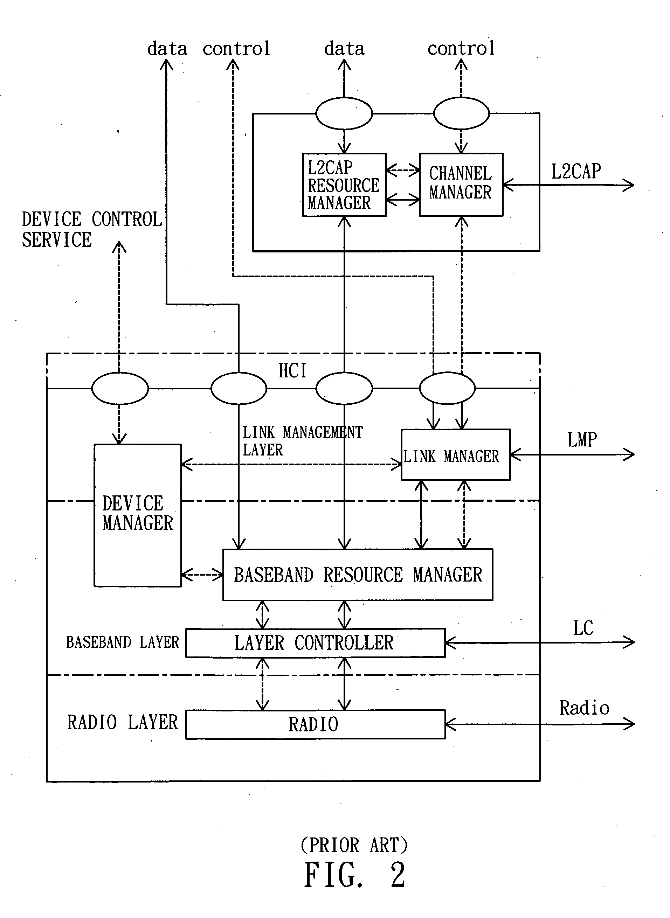

FIG. 2 is a schematic drawing illustrating the architecture of the conventional bluetooth communication protocol. As illustrated, bluetooth communication protocol includes Radio, Baseband, Link Manager, L2CAP, HCI, and Application Framework. The Radio controls frequency synthesizing and noise filtration. The Baseband is the physical layer of the Bluetooth. It manages physical channels and links apart from other services like error correction, data whitening, hop selection and Bluetooth security. The link manager can request from other link manager the clock offset. The L2CAP stands for logical link control and adaptation protocol is used within the bluetooth protocol stack. It passes packets to either the Host Controller Interface (HCI) or on a hostless system, directly to the Link Manager. The HCI provides a command interface to the baseband controller and link manager, and access to hardware status and control registers. The Application Framework provides application program interfaces, such as TCP/IP, HID (Human Interface Device), RFCOMM. The RFCOMM is the abbreviation for Radio Frequency Communication. The bluetooth protocol RFCOMM is a simple set of transport protocols, made on top of the L2CAP protocol, providing emulated RS-232 serial ports (up to sixty simultaneous connections of a bluetooth device at a time). The protocol is based on the ETSI standard TS 07.10. Bluetooth technology also defines SDP (Service Discovery Protocol) according to SIG specification. It is designed for motion environment. Further voice is directly set in the baseband.

When units are not participating in a piconet, then enter standby mode, from which state they periodically listen for page messages. From the total set of 79 (23) hop carriers, a subset of 32 (16) wake-up carriers has been defined. The subset is determined by the unit identity. Over the wake-up carriers, a wake-up sequence visits each hop carrier once: the sequence length is 32 (16) hops. Every 2048 slots (1.28 s), standby units move their wake-up hop carrier forward one hop in the wake-up sequence. The native clock of the unit determines the phase of the wake-up sequence. During the listening interval, the unit listens on a single wake-up hop carrier and correlates incoming signal with the access code derived from its own identity .If the correlator triggers, the unit activates itself and starts a connection-setup procedure. Otherwise, the unit returns sleep untill the next wake-up event.

When a bluetooth device is going to connect to a standby apparatus, it must know the ID data of the remote bluetooth device and correct its original time record, so as to produce the desired fetch code and to convert to wake-up series. At the same time, it estimates the phase difference of this series.

Because the initiator does not actually know the time pulse record of the remote bluetooth device, it must solve unstable time frequency. In order to establish link, the initiator must obtain all the ID data of the bluetooth devices within its paging range, and therefore an inquiry procedure must be performanced. When a remote bluetooth device received the ID data, it gives a response to send its ID data and time pulse record to the initiator. Upon receipt of a response data, the initiator can then call the specific object and establish a connection.

Bluetooth defines that the device who actively require a connection is the bluetooth master, and the device who is requested to make a connection is the bluetooth slave. A bluetooth master device can simultaneously request maximum 7 bluetooth slave devices for connection to form a piconet. A number of piconets can be connected through shairing devices to form a scatternet. When a bluetooth device is turned on, it enters standby mode, and then detect connectable nearby bluetooth devices through an inquiry procedure, and then link a specific bluetooth device through a paging procedure so as to enter a connected mode. In a conventional bluetooth matching method, the bluetooth master device starts the driving program to run a search mode on a display screen to select the desired bluetooth slave device from the searched bluetooth device list. After inputted the PIN of the bluetooth slave device, bluetooth transmission is established.

However, when there are many bluetooth slave devices around, much search time will be wasted, and repeated name of bluetooth slave device may occur. In this case, the bluetooth slave device may stop due to a search overtime, or a mismatch may occur due to a repeated name of the searched bluetooth slave device. Therefore, this conventional bluetooth matching method is still not satisfactory in function.

Furthermore, a conventional bluetooth matching method runs a bluetooth ID data inquiry procedure by means of a screen operation. This bluetooth matching method is not applicable to a bluetooth master device that does not have a display screen.

Therefore, it is desirable to provide a contact type bluetooth match system that eliminates the aforesaid problems.

### SUMMARY OF THE INVENTION

The present invention has been accomplished under the circumstances in view. It is therefore the main object of the present invention to provide a touch type bluetooth match system and bluetooth devices for the system, which allows the bluetooth master device directly enters a connection mode for bluetooth data transmission subject to the bluetooth ID data stored therein after direct touch between the bluetooth master device and the bluetooth slave device for bluetooth ID data interchange.

It is another object of the present invention to provide a touch type bluetooth match system and bluetooth devices for the system, which allows a non-screen bluetooth master device to match a bluetooth slave device by means of direct touch.

To achieve these and other objects of the present invention, the touch type bluetooth match system comprises a bluetooth master device adapted to transmit digital/analog data by means of bluetooth technology and capable of inquiring connection by an active mode, and at least one bluetooth slave device adapted to transmit digital/analog data by means of bluetooth technology and capable of being connected by a passive mode. The at least one bluetooth slave device is set in the bluetooth master device and kept in touch with the bluetooth master device for bluetooth ID data interchange so that the bluetooth master device directly enters a connection mode for bluetooth data transmission subject to the bluetooth ID data stored therein.

According to another aspect of the present invention, the bluetooth master device comprises a bluetooth chip set adapted to execute bluetooth transmitting and matching work, a microcontroller coupled to the bluetooth chip set and adapted to transmit/receive related control signals from the bluetooth chip set for controlling the operation of the bluetooth master device, memory means coupled to the microcontroller and adapted to store the bluetooth ID data of the bluetooth slave device and the bluetooth ID data of the bluetooth master device, and a touch connector coupled to the microcontroller and adapted to detect touch of the bluetooth slave device and to exchange the bluetooth ID data of the bluetooth slave device.

According to still another aspect of the present invention, the bluetooth slave device comprises a bluetooth chip set adapted to execute bluetooth transmitting and matching work, a microcontroller coupled to the bluetooth chip set and adapted to transmit/receive related control signals from the bluetooth chip set for controlling the operation of the respective bluetooth slave device, memory means coupled to the microcontroller and adapted to store the bluetooth ID data of the respective bluetooth slave device and the bluetooth ID data of the bluetooth master device, and a touch connector coupled to the microcontroller and adapted to detect touch of the bluetooth master device and to exchange the bluetooth ID data of the bluetooth master device.

### BRIEF DESCRIPTION OF THE DRAWINGS

FIG 1 is a schematic drawing explaining conventional bluetooth device connection control.
FIG. 2 is a schematic drawing illustrating the architecture of the conventional bluetooth communication protocol.
FIG. 3 is a block diagram of a bluetooth master device according to the present invention.
FIG. 4 is a block diagram of a bluetooth slave device according to the present invention.

### DETAILED DESCRIPTION OF THE PREFERRED EMBODIMENT

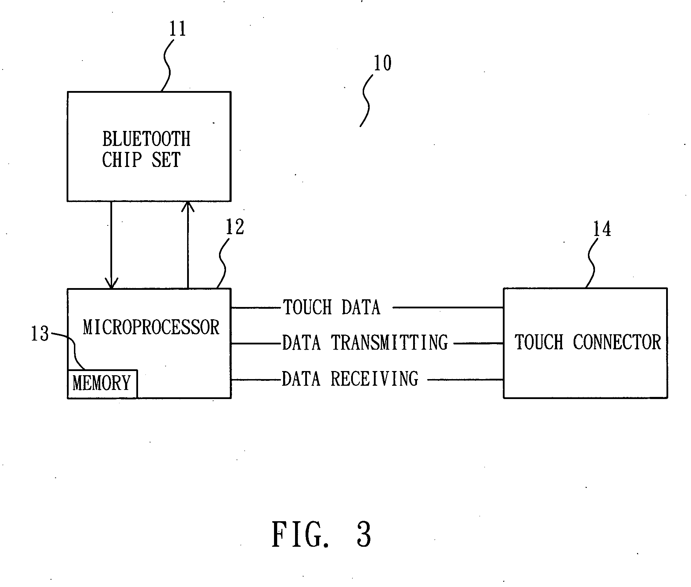

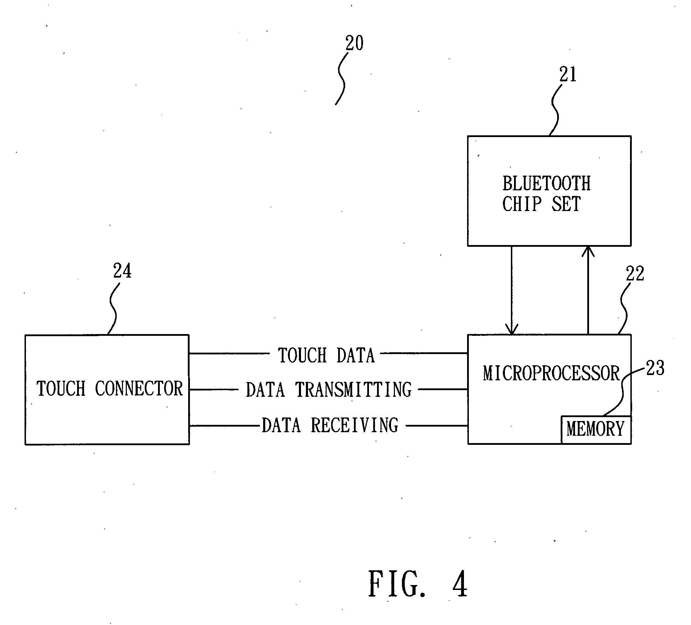

Referring to FIGS. 3 and 4, a touch type bluetooth match system in accordance with the present invention is shown comprised of a bluetooth master device 10 (see FIG. 3) and at least one bluetooth slave device **20** (see FIG 4).

The bluetooth master device **10** can use bluetooth technology to transmit digital or analog data and to request for connection.

As illustrated in FIG 3, the bluetooth master device **10** comprises a bluetooth chip set **11,** a microcontroller **12,** a memory **13,** and a touch connector **14.**

The bluetooth chip set **11** is adapted to execute bluetooth transmitting and matching work. The microcontroller **12** is coupled to the bluetooth chip set **11,** and adapted to transmit/receive related control signals from the bluetooth chip set **11** for controlling the operation of the bluetooth master device **10.** The memory **13** is coupled to the microcontroller **12,** and adapted to store the bluetooth ID data of the bluetooth slave device **20** and the bluetooth ID data of the bluetooth master device **10.** The touch connector **14** is coupled to the microcontroller **12,** and adapted to detect touch of the bluetooth slave device **20** and to exchange the bluetooth ID data of the bluetooth slave device **20,** having touch detection, data receiving and data transmitting pins or terminals (not shown). The bluetooth ID data includes the name of the local device, the pin of the local device, the current profile, the bluetooth local device address, and/or the type of master or slave. Further, the memory **13** can be an EEPROM (electronically erasable programmable read only memory), RAM (random access memory), or Flash memory. The memory **13** can be a data storage device built in the microcontroller **12,** or a mobile external data storage device. According to this embodiment, the memory **13** is directly built in the microcontroller **12.**

The aforesaid bluetooth slave device **20** adapted to transmit digital/analog data by means of bluetooth technology and capable of being connected by a passive mode.

The aforesaid bluetooth slave device **20** comprises a bluetooth chip set **21,** a microcontroller **22,** a memory **23,** and a touch connector **24.**

The bluetooth chip set **21** is adapted to execute bluetooth transmitting and matching work. The microcontroller **22** is coupled to the bluetooth chip set **21,** and adapted to transmit/receive related control signals from the bluetooth chip set **21** for controlling the operation of the bluetooth slave device **20.** The memory **23** is coupled to the microcontroller **22,** and adapted to store the bluetooth ID data of the bluetooth slave device **20** and the bluetooth ID data of the bluetooth master device **10.** The touch connector **24** is coupled to the microcontroller **22,** and adapted to detect touch of the bluetooth master device **10** and to exchange the bluetooth ID data of the bluetooth master device **10,** having touch detection, data receiving and data transmitting pins or terminals (not shown). The bluetooth. ID data includes the name of the local device, the pin of the local device, the current profile, the bluetooth local device address, and/or the type of master or slave. Further, the memory **23** can be an EEPROM (electronically erasable programmable read only memory), RAM (random access memory), or Flash memory. The memory **23** can be a data storage device built in the microcontroller **22,** or a mobile external data storage device. According to this embodiment, the memory **23** is directly built in the microcontroller **22.**

During application, the bluetooth slave device **20** is set in the bluetooth master device **10** or arranged in any manner that causes the necessary touch between the bluetooth slave device **20** and the bluetooth master device **10,** enabling the respective touch connectors **24** and **14** to detect touch. After touch between the bluetooth slave device **20** and the bluetooth master device **10,** the bluetooth master device **10** receives and stores the bluetooth ID data transmitted by the bluetooth slave device **20,** and the bluetooth slave device **20** also receives and stores the bluetooth ID data transmitted by the bluetooth master device **10**.

When obtained the bluetooth ID data of the bluetooth slave device **20**, the bluetooth master device **10** enters the connection mode subject the bluetooth ID data of the bluetooth slave device **20** stored in the memory **13** and by means of HCI (Host Control Interface Command), and then starts to transmit or receive data. By means of the aforesaid arrangement, the bluetooth match system knows whether there is any bluetooth device for connection without through the inquiry procedure. In actual practice, the invention saves the time for the inquiry procedure, and accurately matches the bluetooth slave device for entering the connection mode directly. When compared to conventional bluetooth master and slave matching methods, the invention achieves the inventive step.

The bluetooth device matching method of the present invention does not affect the bluetooth transmission application of a bluetooth device with a display screen, and simplifies the operation of the bluetooth transmission application of a bluetooth master device without screen. The invention eliminates matching error, and facilitates the application of bluetooth PAN (Personal Area Network).

Further, the bluetooth device matching method of the present invention greatly improves the usability of the non-screen bluetooth transmission application, such as bluetooth door bell, bluetooth home cordless phone, bluetooth automatic control transmission, bluetooth remote control, etc.

In general, the touch type bluetooth match devices and system allows the bluetooth master device to enter the connection mode by means of bluetooth ID data interchange through a touch manner when transmitting data by means of bluetooth technology. Therefore, the application of the touch type bluetooth match devices and systems of the present invention greatly improves the drawbacks of conventional techniques.

Although a particular embodiment of the invention has been described in detail for purposes of illustration, various modifications and enhancements may be made without departing from the spirit and scope of the invention.

## Claims

1. A touch type bluetooth match system comprising:
a bluetooth master device adapted to transmit digital/analog data by means of bluetooth technology and capable of inquiring connection by an active mode; and
at least one bluetooth slave device adapted to transmit digital/analog data by means of bluetooth technology and capable of being connected by a passive mode;
wherein said at least one bluetooth slave device is set in said bluetooth master device and kept in touch with said bluetooth master device for bluetooth ID data interchange so that said bluetooth master device directly enters a connection mode for bluetooth data transmission subject to the bluetooth ID data stored therein.

2. The touch type bluetooth match system as claimed in claim 1, wherein said bluetooth master device comprises:
a bluetooth chip set adapted to execute bluetooth transmitting and matching work;
a microcontroller coupled to said bluetooth chip set and adapted to transmit/receive related control signals from said bluetooth chip set for controlling the operation of said bluetooth master device;
memory means coupled to said microcontroller and adapted to store the bluetooth ID data of said bluetooth slave device and the bluetooth ID data of said bluetooth master device, wherein said memory means is built in said microcontroller or an external mobile data storage device; and
a touch connector coupled to said microcontroller and adapted to detect touch of said bluetooth slave device and to exchange the bluetooth ID data of said bluetooth slave device.

3. The touch type bluetooth match system as claimed in claim 1, wherein said at least one slave device each comprises:
a bluetooth chip set adapted to execute bluetooth transmitting and matching work;
a microcontroller coupled to said bluetooth chip set and adapted to transmit/receive related control signals from said bluetooth chip set for controlling the operation of the respective bluetooth slave device;
memory means coupled to said microcontroller and adapted to store the bluetooth ID data of the respective bluetooth slave device and the bluetooth ID data of said bluetooth master device, wherein said memory means is built in said microcontroller or an external mobile data storage device; and
a touch connector coupled to said microcontroller and adapted to detect touch of said bluetooth master device and to exchange the bluetooth ID data of said bluetooth master device.

4. The touch type bluetooth match system as claimed in claim 1, wherein said bluetooth ID data includes the name of the local device, the pin of the local device, the current profile, the bluetooth local device address, and the type of master/slave.

5. A touch type bluetooth master device comprising:
a bluetooth chip set adapted to execute bluetooth transmitting and matching work;
a microcontroller coupled to said bluetooth chip set and adapted to transmit/receive related control signals from said bluetooth chip set for controlling the operation of said bluetooth master device;
memory means coupled to said microcontroller and adapted to store the bluetooth ID data of said bluetooth slave device and the bluetooth ID data of said bluetooth master device; and
a touch connector coupled to said microcontroller and adapted to detect touch of a bluetooth slave device and to exchange the bluetooth ID data of the bluetooth slave device touched thereto.

6. The touch type bluetooth master device as claimed in claim 5, wherein said memory means is one of the data storage devices of EEPROM (electronically erasable programmable read only memory), RAM (random access memory), and Flash memory, and said memory means is built in said microcontroller or an external mobile data storage device.

7. The touch type bluetooth master device as claimed in claim 5, wherein said bluetooth ID data includes the name of the local device, the pin of the local device, the current profile, the bluetooth local device address, and the type of master/slave.

8. A touch type bluetooth slave device comprising:
a bluetooth chip set adapted to execute bluetooth transmitting and matching work;
a microcontroller coupled to said bluetooth chip set and adapted to transmit/receive related control signals from said bluetooth chip set for controlling the operation of said bluetooth slave device;
memory means coupled to said microcontroller and adapted to store the bluetooth ID data of said bluetooth slave device and the bluetooth ID data of a bluetooth master device; and
a touch connector coupled to said microcontroller and adapted to detect touch of a bluetooth master device and to exchange the bluetooth ID data of the bluetooth master device touched thereto.

9. The touch type bluetooth master device as claimed in claim 8, wherein said memory means is one of the data storage devices of EEPROM (electronically erasable programmable read only memory), RAM (random access memory), and Flash memory, and said memory means is built in said microcontroller or an external mobile data storage device.

10. The touch type bluetooth master device as claimed in claim 16, wherein said bluetooth ID data includes the name of the local device, the pin of the local device, the current profile, the bluetooth local device address, and the type of master/slave.
